**Europäisches Patentamt**

**European Patent Office**

**Office européen des brevets**

(19)

(11) Veröffentlichungsnummer : **0 391 930 B1**

(12) **EUROPÄISCHE PATENTSCHRIFT**

(45) Veröffentlichungstag der Patentschrift :
**02.01.92 Patentblatt 92/01**

(51) Int. Cl.⁵ : **F02D 41/22,** B60K 31/02

(21) Anmeldenummer : **88909517.0**

(22) Anmeldetag : **12.11.88**

(86) Internationale Anmeldenummer :
**PCT/DE88/00706**

(87) Internationale Veröffentlichungsnummer :
**WO 89/05906 29.06.89 Gazette 89/14**

(54) **VERFAHREN UND EINRICHTUNG ZUR ERKENNUNG UND LOCKERUNG VERKLEMMTER STELLELEMENTE.**

(30) Priorität : **21.12.87 DE 3743309**

(43) Veröffentlichungstag der Anmeldung :
**17.10.90 Patentblatt 90/42**

(45) Bekanntmachung des Hinweises auf die
Patenterteilung :
**02.01.92 Patentblatt 92/01**

(84) Benannte Vertragsstaaten :
**DE GB SE**

(56) Entgegenhaltungen :
**EP-A- 0 171 641**
**EP-A- 0 269 118**
**EP-A- 0 276 003**
**EP-A- 0 285 868**

(73) Patentinhaber : **ROBERT BOSCH GmbH**
**Postfach 10 60 50**
**W-7000 Stuttgart 10 (DE)**

(72) Erfinder : **RODEFELD, Frank**
**Raitestrasse 21A**
**W-7141 Möglingen (DE)**

EP 0 391 930 B1

## Beschreibung

### Stand der Technik

Die Erfindung bezieht sich auf ein Verfahren und eine Einrichtung zur Erkennung und Lockerung verklemmter Stellelemente. Solche Stellelemente sind seit langem bekannt, siehe z.B. DE-OS 25 23 283 oder DE-OS 27 14 113. Eine spezielle Ausführungsform eines solchen Stellgliedantriebes, wie z.B. der Doppelwicklungsdrehsteller wird in der DE-OS 28 12 292 beschrieben. Leerlaufregelsysteme mit einem weiteren Stellglied in einem zusatzluftführenden Umgehungskanal zur Drosselklappe für Brennkraftmaschinen werden z.B. in der DE-PS 27 49 369 oder der DE-PS 29 49 884 beschrieben. Bei derartigen elektromechanischen Stellelementen mit kontinuierlicher Kennlinie kann nun durch Verschmutzung oder Eisbildung eine erhöhte Hysterese oder auch ein Klemmen des Stellelementes auftreten. So wurden in der Vergangenheit Konstruktionen für derartige Stellglieder entworfen, die bei nichterregtem Stellmotor oder bei einem Ausfall des Stellmotors das Stellglied mit Hilfe einer Feder auf einen definierten Drosselquerschnitt verfuhren der ausreichte, um die Brennkraftmaschine mit einer für die jeweilige Situation ausreichenden Luftmenge zu versorgen. Eine solche Konstruktion wird in der DE-OS 32 34 468 beschrieben.

Die EP-A-171 641 beschreibt ein elektronisches Gaspedal für ein Kraftfahrzeug, wobei zur Erkennung der Anschläge der Drosselklappe die Soll- und Ist-Stellung überprüft wird und der jeweilige Anschlag dann als erreicht angenommen wird, wenn die Differenz zwischen Soll- und Ist-Stellung der Drosselklappe eine vorbestimmte Schwelle überschreitet. Durch eine derartige Vorgehensweise ist ein zwangsweiser Stillstand der Drosselklappe infolge ihrer Anschläge erkennbar, Maßnahmen außerhalb dieser Anschlagsbereiche werden jedoch nicht angesprochen.

Die nicht vorveröffentlichte EP-A-285 868 beschreibt ein Verfahren zur Steuerung der Drosselklappe über einen Schrittmotor, wobei vorgeschlagen wird, die Funktionsfähigkeit von Schrittmotor und Drosselklappe zu überwachen. Es wird ein Fehler, beispielsweise eine festgefrorene Drosselklappe angenommen, wenn der Rotor des Schrittmotors einer entsprechenden Verstellung des Feldvektors in angemessener Zeit nicht folgt. Bei erkanntem Fehler bricht eine Rüttelbewegung die Drosselklappe frei.

### Vorteil der Erfindung

Das erfindungsgemäße Verfahren und Einrichtung zur Erkennung und Lockerung klemmender Stellelemente mit den Merkmalen des Anspruches 1 bzw. 11 hat demgegenüber den Vorteil, daß das Klemmen eines Stellelementes erkannt wird und durch Einleiten der erfindungsgemäßen Maßnahmen das Stellglied in vielen Fällen wieder gelockert werden kann bzw. ein Überschwingen bei plötzlicher Überwindung des Widerstandes vermieden wird. Dabei ist zu beachten, daß je nach Bauform des vorhandenen Stellelementes in Kombination mit einer Prozessorsteuerung des Antriebssystems keine oder nur wenige zusätzliche Bauteile erforderlich sind. Durch die in den Unteransprüchen aufgeführten Maßnahmen sind vorteilhafte Weiterbildungen und Verbesserungen der Erfindung nach Anspruch 1 bzw. 11 möglich und für verschiedene Antriebssysteme beschrieben.

### Zeichnung

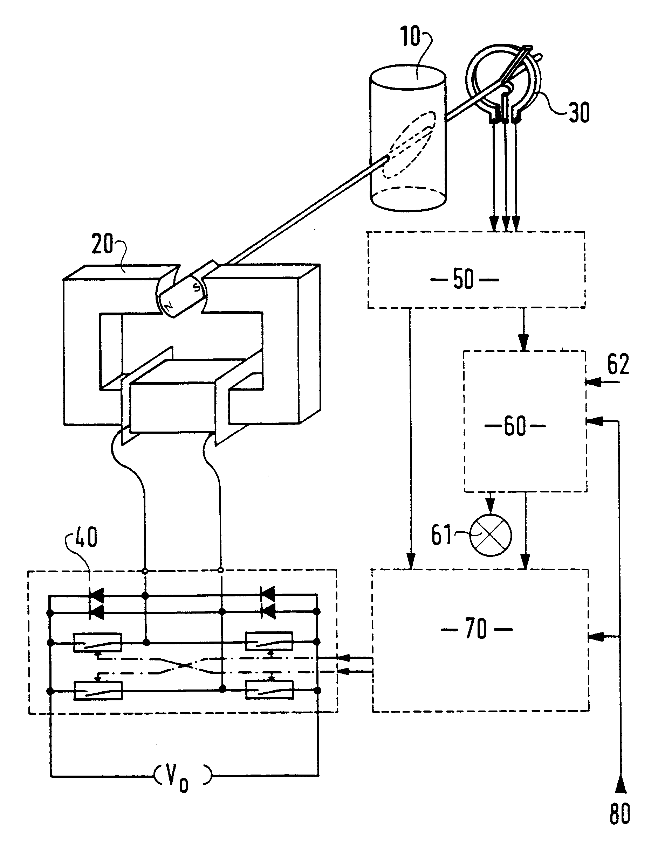

Ein Ausführungsbeispiel der Erfindung ist in der einzigen Zeichnung Figur 1 vereinfacht dargestellt und in der nachfolgenden Beschreibung näher erläutert.

### Beschreibung des Ausführungsbeispieles

In der Figur 1 sind die Elemente anhand derer die Erfindung erläutert werden soll dargestellt. Dabei ist das Stellelement (Drosselklappe) mit der 10 bezeichnet. Der zugehörige Antrieb 20 und die Istwertmeldeeinrichtung 30 sind auf der gleichen Drehachse befestigt. Der Istwertmeldeeinrichtung 30 ist eine elektronische Ist-werterfassung 50 nachgeschaltet. Von dort wird der Istwert der erfindungsgemäßen Sicherheits- und Steuerlogik 60 sowie der Lageregelung 70 zugeführt. Weiterhin kann die erfindungsgemäße Sicherheits- und Steuerlogik 60 in die Lageregelung eingreifen. Der Lageregelung 70 ist eine Endstufe 40 nachgeschaltet, die den Stellgliedantrieb 20 ansteuert. Der Sicherheits- und Steuerlogik 60 und der Lageregelung 70 ist außerdem der Stellelementesollwert 80 zugeführt. Weiterhin ist eine Störungsmeldeeinrichtung 61 mit der Steuerlogik 60 verbunden und über einen separaten Eingang 62 kann der Steuerlogik 60 noch ein spezieller Betriebszustand (z.B. Startfall) gemeldet werden.

Um ein Klemmen des Stellelementes zu erkennen, kann die Differenz von dem Istwert der Stellgröße und dem vorgegebenen Sollwert der Stellgröße verwendet werden. Sobald die Differenz eine bestimmte Schwelle überschreitet, wird ein Klemmen des Stellelementes angenommen. Des weiteren kann durch Aufsummieren der Differenzwerte in einem bestimmten Zeitraster (integrieren), ein Maß für das Klemmen des Stellantriebes gewonnen werden. Weiterhin kann die Klemmenerkennung abgeschaltet werden, wenn z.B. eine Einrichtung vorhanden ist, die die mechanischen Endanschläge ertasten soll, oder z.B. im Startmoment einer der mechanischen Endanschläge angefahren werden soll. Derartige Verklemmungen bei elektromechanischen Stellelementen können z.B. durch Verschmutzung oder Eisbildung hervorgerufen werden.

Derartige elektromechanische Stellelemente werden oft mit Impulssignalen fester Frequenz und variabler Impulsdauer (Tastverhältnis), angesteuert, um eine kontinuierliche Verstellung zu bewirken. Die Frequenz wird so gewählt, daß die Stellgröße, bedingt durch die mechanische Trägheit ausreichend geglättet eingestellt wird. Die dabei auftretenden geringen mechanischen Bewegungen sind beabsichtigt und dienen zur Verringerung der Hysterese des Stellelementes durch Vermeidung von Haftreibung. Als Maßnahme zum Lösen bei klemmenden Stellelementen bieten sich folgende Methoden an:

1 Das Steuersignal wird in einem bestimmten Zeitraster ständig vergrößert oder verkleinert, je nach Richtung der Abweichung von Soll- und Istwert. Gleichzeitg wird das Sollsignal ab Überschreiten eines Schwellwertes der Differenz zwischen Soll- und Ist-Wertsignal nicht mehr weiter vergrößert, um bei erkanntem Lösen des Stellelementes ein definiertes Einschwenken des Stellelementes auf den aktuellen Sollwert ohne Überschwingen zu erreichen.

2a Die Frequenz des Steuersignales (Impulssignal) wird für eine bestimmte Zeitdauer soweit reduziert, daß sie in der Nähe der Resonanzfrequenz des Stellelementes liegt. Durch die dabei auftretenden starken Momentenänderungen kann ein Klemmen gelöst werden. Das Tastverhältnis bleibt das gleiche wie bei normaler Frequenz, damit der Mittelwert der Stellgröße auch aach dem Lösen erhalten bleibt. Danach wird wieder auf normale Impulsfrequenz übergegangen.

2b Bei elektrischen Antrieben, die aktiv in zwei Richtungen betrieben werden können, wird der Antrieb nicht nur mit niederer Frequenz ein- und ausgeschaltet, sondern reversierend angesteuert.

Die Trägheit (Zeitkonstante) der durch die Stellgröße beeinflußten Regelstrecke muß groß sein, im Verhältnis zu der niedrigen Steuerfrequenz für das Stellelement, um genügend kleine Regelgrößenamplituden zu erhalten. Dies ist bei Verbrennungsmotoren allgemein gegeben.

In der Figur des Ausführungsbeispieles ist ein Antrieb gezeigt, der in zwei Richtungen bewegt werden kann. Daher ist die Endstufe der Lageregelung 70 eine Brückenschaltung 40. Ein äquivalenter Effekt läßt sich jedoch auch für den Doppelwicklungsdrehsteller wie auch für andere Antriebe erreichen. Eine weitere vorteilhafte Ausgestaltung der Erfindung ist darin zu sehen, daß bei ein- oder mehrfachem Auftreten eines Klemmens eine Fehlanmeldung an den Fahrer ergeht.

Das vorstehend beschriebene Ausführungsbeispiel ist keineswegs einschränkend zu verstehen, neben diversen schon bestehenden Antriebssystemen für Stellglieder und den dazugehörigen eventuell zu modifizierenden Ansteuerschaltungen sind auch rein mechanische Lösungen für einen derartigen Rüttelantrieb denkbar. So könnte z.B. bei einem rein mechanischen Antrieb über eine Rutschkupplung ein Rüttelwerk ähnlich einer Schlagbohrmaschine ausgelöst werden. Auch elektromechanische Lösungen mit einem selbsttätigen Unterbrecher (Wagnerscher Hammer) sind denkbar. Weiterhin läßt sich die Erfindung sowohl an einer Hauptdrosselklappe als auch einem Stellelement in einer Bypaßleitung anwenden.

## Patentansprüche

1. Verfahren zur Einstellung einer Betriebskeugröße einer Brennkraftmaschine, mit einem elektromechanischen Stellglied zur Einstellung der Luftzufuhr zur Brennkraftmaschine in Abhängigkeit von Einflußgrößen wie Drehzahl, temperatur, Lastzustand und Fahrpedalstellung, wobei die Luftzufuhr zur Brennkraftmaschine über die Position des Stellglieds von einem elektronischen Steuergerät in Abhängigkeit einer vorgegebenen und einer momentanen Position gesteuert wird, wobei ein Verklemmen des Stellglieds aus einer größer werdenden Abweichung zwischen vorgegebener und momentaner Position erkannt wird und das Stellglied bei erkannter Verklemmung zu einer periodisch rüttelnden Bewegung veranlaßt wird, um die Verklemmung zu lösen.

2. Verfahren nach Anspruch 1, dadurch gekennzeichnet, daß das Stellglied im antriebslosen Zustand von einer Feder in eine bestimmte Ruheposition verstellt wird.

3. Verfahren nach einem der Ansprüche 1 oder 2, dadurch gekennzeichnet, daß das Stellglied beim Rütteln periodisch niederfrequent, insbesondere in der Nähe der Resonanzfrequenz angesteuert wird.

4. Verfahren nach einem der Ansprüche 1 bis 3, dadurch gekennzeichnet, daß, wenn es sich um einen Zweiwicklungsdrehsteller (ZWD) handelt, die Rüttelbewegung durch ein alternierendes Ansteuern der Wicklungen erzeugt wird.

5. Verfahren nach einem der Ansprüche 1 bis 4, dadurch gekennzeichnet, daß bei einem Einwicklungsdrehsteller (EWD) der durch die Wicklung angetriebene teil ein Permanentmagnet ist.

6. Verfahren nach einem der Ansprüche 1 bis 5, dadurch gekennzeichnet, daß die Polarität der Antriebsspannung bzw. des Stromes periodisch wechselt zum Hervorrufen der Rüttelbewegung.

7. Verfahren nach einem der Ansprüche 1 bis 6, dadurch gekennzeichnet, daß bei der Rüttelbewegung ein Nettostellmoment in der Richtung der Sollverstellung erhalten bleibt.

8. Verfahren nach einem der Ansprüche 1 bis 7, dadurch gekennzeichnet, daß bei erkanntem Lösen der Verklemmung das Stellelement behutsam an den Sollwert herangefahren wird, um ein Überschwingen zu vermeiden.

9. Verfahren nach einem der Ansprüche 1 bis 8, dadurch gekennzeichnet, daß ein Rütteln, insbesondere mit einem rückstellenden Nettostellmoment wirksam wird, wenn die Kraft der Rückholfeder nicht ausreicht zur Überwindung des mechanischen Widerstandes bzw. die Rückholfeder gebrochen ist, so daß das Stellelement nicht in die Ruheposition zurückkehrt.

10. Verfahren nach einem der Ansprüche 1 bis 9, dadurch gekennzeichnet, daß nach ein oder mehrfacher Inanspruchnahme der Rüttelsteuerung eine Störungsmeldung für den Fahrer und/oder den Service ausgegeben wird.

11. Einrichtung zur Einstellung einer Betriebskenngröße einer Brennkraftmaschine, mit einem elektromechanischen Stellglied zur Einstellung der Luftzufuhr zur Brennkraftmaschine in Abhängigkeit von Einflußgrößen wie Drehzahl, temperatur, Lastzustand und Fahrpedalstellung, mit einem elektronischen Steuergerät, welches die Luftzufuhr zur Brennkraftmaschine über die position des Stellglieds in Abhängigkeit einer vorgegebenen und einer momentanen position steuert, wobei Mittel vorhanden sind, die ein Verklemmen des Stellgliedes aus einer größer werdenden Abweichung zwischen vorgegebener und momentaner position erkennen und die bei erkannter Verklemmung eine periodisch rüttelnde Bewegung des Stellgliedes veranlassen, um die Verklemmung zu lösen.

12. Einrichtung nach Anspruch 11, dadurch gekennzeichnet, daß ein Mittel vorhanden ist, um bei ein oder mehrfacher Inanspruchnahme der Rüttelsteuerung eine Störungsmeldung für den Fahrer und/oder den Service auszugeben.

## Claims

1. Method for setting an operating parameter of an internal combustion engine, having an electro-mechanical actuator for setting the air supply to the internal combustion engine as a function of factors of influence such as rotational speed, temperature, load condition and accelerator pedal position, the air supply to the internal combustion engine being controlled by means of the position of the actuator of an electronic control unit as a function of a specified position and an instantaneous position and jamming of the actuator being recognised from an increasing difference between the specified and the instantaneous position, the actuator being induced to perform a periodic shaking motion, when jamming is recognised, in order to release the jamming.

2. Method according to Claim 1, characterised in that the actuator is adjusted by a spring into a certain rest position in the non-driven condition.

3. Method according to one of Claims 1 or 2, characterised in that when shaking, the actuator is controlled to a periodic low frequency, in particular one in the vicinity of the resonance frequency.

4. Method according to one of Claims 1 to 3, characterised in that where a two-winding rotary actuator (ZWD) is concerned, the shaking motion is generated by activating the windings alternately.

5. Method according to one of the Claims 1 to 4, characterised in that in the case of a single-winding rotary actuator (EWD), the part driven by the winding is a permanent magnet.

6. Method according to one of Claims 1 to 5, characterised in that the polarity of the driving voltage or of the current alternates periodically in order to induce the shaking motion.

7. Method according to one of Claims 1 to 6, characterised in that during the shaking motion, a net adjustment moment in the direction of the required adjustment is maintained.

8. Method according to one of Claims 1 to 7, characterised in that when release of the jamming is recognised, the setting element is carefully driven to the required value in order to avoid an overshoot.

9. Method according to one of Claims 1 to 8, characterised in that shaking, particularly with a net return adjusting moment, becomes effective when the force of the return spring is not sufficient to overcome the mechanical resistance or if the return spring is broken, so that the setting element does not return to the rest position.

10. Method according to one of Claims 1 to 9, characterised in that after the shaking control has been utilized one or several times, a fault report is emitted for the driver and/or the service organisation.

11. Device for setting an operating parameter of an internal combustion engine, having an electro-mechanical actuator for setting the air supply to the internal combustion engine as a function of factors of influence such as rotational speed, temperature, load condition and accelerator pedal position, having an electronic control unit which controls the air supply to the internal combustion engine by means of the position of the actuator as a function of a specified position and an instantaneous position, means being present which recognise jamming of the actuator from an increasing difference between the specified and the instantaneous position, which means cause a periodic shaking motion of the actuator when jamming is recognised, in order to release the jamming.

12. Device according to Claim 11, characterised in that a means is present so that after the shaking control has been utilized one or several times, a fault report is emitted for the driver and/or the service organisation.

**Revendications**

1. Procédé pour régler une grandeur caractéristique de fonctionnement d'un moteur à combustion interne à l'aide d'un organe de réglage électromécanique, pour régler l'alimentation en air du moteur à combustion interne en fonction des paramètres tels que la vitesse de rotation, la température, l'état de charge et la position de la pédale d'accélération, l'alimentation en air du moteur à combustion interne étant commandée par la position de l'organe de réglage par un dispositif de commande électronique en fonction d'une position prédéterminée et d'une position instantanée, le grippage de l'organe de réglage étant détecté lorsque la différence entre la position prédéterminée et la position instantanée augmente et l'organe de réglage, une fois le grippage constaté, étant soumis à un mouvement vibratoire périodique pour le dégrippage.

2. Procédé selon la revendication 1, caractérisé en ce que l'organe de réglage à l'état non entraîné est mis dans une certaine position de repos par un ressort.

3. Procédé selon l'une des revendications 1 et 2, caractérisé en ce que l'organe de réglage est commandé notamment au voisinage de sa fréquence de résonance propre par une mise en secousse périodique à basse fréquence.

4. Procédé selon l'une des revendications 1 à 3, caractérisé en ce que dans le cas d'un organe de réglage de rotation à deux bobines, on génère les secousses par une commande alternée des bobines.

5. Procédé selon l'une des revendications 1 à 4, caractérisé en ce que dans le cas de l'organe de réglage de rotation à une bobine, la partie entraînée par l'enroulement est un aimant permanent.

6. Procédé selon l'une des revendications 1 à 5, caractérisé en ce que la polarité de la tension d'entraînement ou du courant est modifiée périodiquement par le mouvement de secousse.

7. Procédé selon l'une des revendications 1 à 6, caractérisé en ce que dans le cas du mouvement de secousse, on conserve un couple de positionnement net en direction du réglage de consigne.

8. Procédé selon l'une des revendications 1 à 7, caractérisé en ce que quand on a détecté que le grippage de l'élément de réglage est libéré, on se rapproche avec précaution de la valeur de consigne pour éviter un dépassement.

9. Procédé selon l'une des revendications 1 à 8, caractérisé en ce qu'une secousse devient efficace notamment, avec un couple de réglage net de rappel, si la force du ressort de rappel n'est pas suffisante pour vaincre la résistance mécanique ou si le ressort de rappel est cassé, si bien que l'élément de réglage ne revient pas en position de repos.

10. Procédé selon l'une des revendications 1 à 9, caractérisé en ce qu'après une ou plusieurs mises en oeuvre de la commande de secousse, un signal d'incident est émis pour le conducteur et/ou pour le service d'entretien.

11. Installation de réglage d'une grandeur de caractéristique de fonctionnement d'un moteur à combustion interne comportant un organe de réglage électromécanique pour régler l'alimentation en air du moteur à combustion interne, en fonction des paramètres tels que la vitesse de rotation, la température, l'état de charge et la position de la pédale d'accélérateur, avec un dispositif de commande électronique qui commande l'alimentation en air du moteur à combustion interne par la position de l'organe de réglage en fonction d'une position prédéterminée et d'une position instantanée, des moyens étant prévus pour déceler tout grippage de l'élément de réglage à partir d'une différence croissante entre la position prédéterminée et la position instantanée, et en cas de grippage constaté, pour commander un mouvement de secousse périodique de l'organe de réglage pour le dégripper.

12. Installation selon la revendication 11, caractérisée par un moyen pour qu'en cas d'une ou plusieurs mises en oeuvre de la commande de secousse, il émette un signal d'incident pour le conducteur et/ou le service d'entretien.